# DEMANDE DE BREVET EUROPEEN

(11) **EP 2 892 057 A2**
(43) Date de publication de la demande: **08.07.2015**
(21) Numéro de dépôt: 14197551.6
(22) Date de dépôt: 12.12.2014
(51) Int. Cl.: H01B 7/295, H01B 3/10, H01B 3/08, D03D 15/12

(54) **Enveloppe de protection thermique pour protéger un câble et/ou un accessoire pour câble**

(30) Priorité: 13.12.2013 FR 1362591
(71) Demandeur: Nexans, 75008 Paris (FR)
(72) Inventeur: Mazel, Christelle, 38300 Ruy (FR); Cossalter, Alain, 69700 Echalas (FR); Seux, Thierry, 38550 Sablons (FR)
(74) Mandataire: Peguet, Wilfried

(57) **Abrégé**

La présente invention concerne un dispositif comprenant un câble (10a, 10b, 10c) et/ou un accessoire (20, 30) pour câble, ledit câble et/ou ledit accessoire pour câble étant entouré par au moins une enveloppe de protection thermique (40, 50) comprenant un matériau inorganique ayant un point de fusion supérieur à 800°C, caractérisé en ce que le matériau inorganique est un matériau tissé comprenant des mèches, chaque mèche comprenant au moins deux filaments du matériau inorganique.

## Description

La présente invention se rapporte à un dispositif comprenant un câble et/ou un accessoire pour câble, ledit câble et/ou l'accessoire pour câble étant entouré par une enveloppe de protection thermique, et à l'utilisation de cette enveloppe de protection thermique.

Elle s'applique typiquement, mais non exclusivement, aux domaines des câbles d'énergie à basse tension (notamment inférieure à 1-1,5kV), à moyenne tension (notamment de 1-1,5 à 50-75 kV) ou à haute tension (notamment supérieur à 50-75 kV), qu'ils soient à courant continu ou alternatif, les câbles d'énergie étant typiquement associés à des accessoires du type jonction et/ou terminaison pour câble.

Le document WO 2004/101872 décrit une enveloppe de protection anti-vandalisme et résistante au feu, utilisable dans des domaines techniques divers et variés tels que par exemple les enveloppes de protection thermique pour les tuyaux, les valves ou les câbles, notamment en tant que ruban. Cette enveloppe de protection est obtenue à partir de fibres de basalte reliées à des éléments métalliques de renforcement.

Cette enveloppe de protection peu flexible et sous forme de ruban est toutefois difficile à installer autour des dispositifs comprenant un câble relié à son accessoire du type jonction ou terminaison. Cette enveloppe de protection s'adapte en effet difficilement à des sections de diamètre différent le long de ces dispositifs. Cette enveloppe de protection est en outre relativement complexe à fabriquer.

Le but de la présente invention est de pallier les inconvénients des techniques de l'art antérieur en proposant un dispositif comprenant un câble et/ou un accessoire pour câble, ledit câble et/ou l'accessoire pour câble étant entouré par une enveloppe de protection thermique obtenue à partir d'un matériau ayant un point de fusion supérieur à 800°C, ledit dispositif étant facile à fabriquer et à mettre en oeuvre, et s'adaptant à tout type de variation de sections de diamètre le long du dispositif, tout en garantissant une très bonne protection thermique.

La présente invention a pour objet un dispositif comprenant un câble et/ou un accessoire pour câble, ledit câble et/ou ledit accessoire pour câble étant entouré par au moins une enveloppe de protection thermique comprenant un matériau inorganique ayant un point de fusion supérieur à 800°C, caractérisé en ce que le matériau inorganique est un matériau tissé.

L'enveloppe de protection thermique de l'invention est facile à fabriquer et à installer, et permet avantageusement de protéger thermiquement de façon homogène un câble et/ou un accessoire pour câble, et plus particulièrement l'interphase établie entre le câble et son accessoire, quelques soient la structure et les reliefs propres au dispositif.

De préférence, le dispositif de l'invention satisfait à la norme de résistance au feu IEC 600331, avec un câble électrique sous une tension de 6 kV à 750°C.

En outre, l'enveloppe de protection est très flexible, ce qui lui permet d'épouser facilement la structure et les reliefs propres au dispositif, tout en limitant son encombrement.

On entend par « matériau tissé » un matériau obtenu en entrecroisant des fils comprenant ledit matériau inorganique, notamment en entrecroisant des fils s'étendant dans une première direction (par exemple des fils longitudinaux) avec des fils s'étendant dans une deuxième direction (par exemple des fils transversaux).

De préférence, l'enveloppe de protection thermique peut ne pas comprendre d'élément métallique. Plus particulièrement, l'enveloppe de protection thermique ne comprend pas d'élément métallique de renforcement associé au matériau inorganique. L'absence d'élément métallique dans l'enveloppe de protection thermique optimise sa souplesse et sa flexibilité.

Dans un mode de réalisation préférée de l'invention, l'enveloppe de protection thermique est une enveloppe non rubanée. En d'autres termes, elle n'est pas formée par l'enroulement d'un ruban autour du câble et/ou de l'accessoire pour câble. Elle n'inclut donc pas des zones de recouvrement, propres aux agencements rubanés, tout le long de la partie recouverte du câble et/ou de l'accessoire pour câble.

Dans un mode de réalisation particulier, l'enveloppe de protection thermique est indépendante du câble et/ou de l'accessoire pour câble.

On entend par « enveloppe de protection thermique indépendante » une enveloppe qui peut être séparée du câble et/ou de l'accessoire pour câble sans causer le moindre dommage mécanique et/ou électrique audit câble et/ou audit accessoire pour câble, et notamment sans causer le moindre dommage à la couche la plus extérieure constituant le câble et/ou l'accessoire pour câble.

L'enveloppe de protection thermique ne fait de préférence pas partie intégrante du câble et/ou de l'accessoire pour câble en tant que tel(s), permettant ainsi de préserver l'intégrité électrique et/ou mécanique du câble et/ou de l'accessoire pour câble au sein du dispositif. Plus particulièrement, le câble et/ou l'accessoire pour câble avec lequel l'enveloppe de protection thermique est associée, gardent l'ensemble de leurs propriétés électriques et mécaniques intactes au sein du dispositif de l'invention.

L'enveloppe de protection thermique de l'invention peut avantageusement avoir une épaisseur sensiblement constante, notamment le long de la partie du câble et/ou de l'accessoire pour câble à protéger. Elle peut être une enveloppe continue, formée d'une seule pièce.

L'enveloppe de protection thermique de l'invention peut comprendre au moins une extrémité ouverte pour le passage du câble et/ou de l'accessoire pour câble.

Selon une première variante, l'enveloppe de protection thermique peut comprendre deux extrémités ouvertes pour le passage du câble et/ou de l'accessoire pour câble, notamment lorsque l'accessoire est une jonction pour câble.

Selon une deuxième variante, l'enveloppe de protection thermique peut comprendre uniquement une extrémité ouverte pour le passage du câble et/ou de l'accessoire pour câble, notamment lorsque l'accessoire est une terminaison pour câble.

De préférence, l'enveloppe de protection thermique peut être de forme cylindrique.

Le matériau inorganique de l'invention étant un matériau tissé constitutif de l'enveloppe de protection thermique, on peut donc dire que cette dernière peut être une enveloppe tissée.

L'extrémité ouverte pour le passage du câble et/ou de l'accessoire pour câble peut donc avoir un périmètre d'ouverture variable selon la tension appliquée sur les fils formant l'enveloppe de protection thermique de l'invention. Un périmètre minimal et un périmètre maximal peuvent donc être définis pour dimensionner l'ouverture de ladite extrémité. Lorsque les fils sont resserrés au maximum à l'extrémité ouverte, on peut parler d'ouverture minimale. Lorsque les fils sont séparés au maximum à l'extrémité ouverte, on peut parler d'ouverture maximale.

De préférence, le périmètre minimal d'ouverture de l'extrémité ouverte est inférieur au périmètre extérieur du câble et/ou de l'accessoire pour câble.

L'extrémité ouverte de l'enveloppe de protection thermique est de préférence de type circulaire. Dans ce cas, on pourra parler de diamètre minimal pour « périmètre minimal », et de diamètre maximal pour « périmètre maximal ».

Le matériau inorganique constitutif de l'enveloppe de protection thermique est un matériau ayant un point de fusion supérieur à 800°C, et de préférence supérieur à 1000°C. Il peut avantageusement comprendre de la silice (SiO₂).

Dans un mode de réalisation particulièrement avantageux, le matériau inorganique peut comprendre des fibres de basalte. Le basalte, comprenant de la silice, a une température de fusion supérieure à 1000°C, et de préférence de l'ordre de 1200°C.

L'enveloppe de protection thermique peut comprendre uniquement des fibres de basalte.

Les fibres de basalte peuvent être des filaments de basalte (i.e. des fils de basalte), de préférence continu. Ces filaments de basalte permettent de faciliter le tissage de l'enveloppe de protection thermique.

L'enveloppe de protection thermique peut comprendre uniquement des filaments de basalte (i.e. des fils de basalte).

Les fibres de basalte, et plus particulièrement les fils de basalte, peuvent être recouvert(e)s d'un matériau polymère, réticulé ou non. De préférence, les fibres de basalte, et plus particulièrement les fils de basalte, ne sont pas recouvert(e)s d'un matériau polymère.

Le matériau inorganique est de préférence un matériau tissé comprenant des mèches, chaque mèche pouvant comprendre plusieurs filaments (ou fils) du matériau inorganique, comme par exemple plusieurs filaments de basalte. Ces filaments constitutifs de chaque mèche peuvent être sensiblement parallèles les uns aux autres.

Le matériau tissé peut comprendre une première série d'au moins deux mèches sensiblement parallèles et une deuxième série d'au moins deux mèches sensiblement parallèles.

La première série s'étend avantageusement selon une première direction et la deuxième série s'étend selon une deuxième direction, la première direction étant différente de la deuxième direction. Plus particulièrement, la première série de mèches (première direction) passe au-dessus et en-dessous de la deuxième série de mèches (deuxième direction).

Chaque mèche peut comprendre au moins deux filaments de matériau inorganique, de préférence au moins 20 filaments de de matériau inorganique, de préférence au moins 50 filaments de de matériau inorganique, et de préférence au moins 100 filaments de de matériau inorganique. A titre d'exemple, une mèche peut comprendre 106 filaments de matériau inorganique.

Chaque filament de matériau inorganique (ou monofilament) peut avoir avantageusement un diamètre inférieur à 100 microns, de préférence inférieure à 50 microns, et de préférence inférieur à 20 microns. Le diamètre d'un filament peut être d'au moins 1 micron, et de préférence d'au moins 5 microns. A titre d'exemple, un filament a un diamètre d'environ 13 microns.

Dans un mode de réalisation particulier, la masse linéique de chaque couche peut aller de 100 g/km à 300 g/km, et de préférence est égale à environ 200 g/km.

L'enveloppe de protection thermique de l'invention peut comprendre une ou plusieurs couches tissées du matériau inorganique tel que défini dans l'invention.

L'enveloppe de protection thermique de l'invention peut entourer avantageusement le ou les câbles et l'accessoire pour câble.

La ou les extrémités ouvertes de l'enveloppe de protection thermique peuvent être maintenues autour du câble et/ou de l'accessoire pour câble par un élément de maintien, tel que par exemple un ruban adhésif, un collier de serrage ou une pince.

Dans un mode de réalisation particulier de l'invention, le câble et/ou l'accessoire pour câble est entouré par au moins deux enveloppes de protection thermique, telles que définies dans la présente invention.

Dans la présente invention, on entend par le terme « câble » un câble électrique et/ou optique, d'énergie et/ou de télécommunication, bien connu de l'homme du métier. Ce câble comprend un élément conducteur allongé, du type électrique et/ou optique, entouré par au moins une couche polymérique.

Le câble de l'invention peut être plus particulièrement un câble électrique d'énergie à basse tension (notamment inférieure à 6kV), à moyenne tension (notamment de 6 à 45-60 kV) ou à haute tension (notamment supérieur à 60 kV, et pouvant aller jusqu'à 800 kV), qu'ils soient à courant continu ou alternatif, bien connu de l'homme du métier.

Plus particulièrement, le câble de l'invention peut comprendre :
- un élément électriquement conducteur allongé,
- une première couche semi-conductrice entourant l'élément électriquement conducteur allongé,
- une couche électriquement isolante entourant la première couche semi-conductrice, et
- une deuxième couche semi-conductrice entourant la couche électriquement isolante.

La deuxième couche semi-conductrice peut être entourée par un écran métallique de mise à la terre et/ou de protection.

Elle peut aussi être entourée par une gaine extérieure de protection, cette gaine de protection entourant l'écran métallique lorsqu'il existe.

L'élément électriquement conducteur allongé du câble électrique peut être un fils métallique ou une pluralité de fils métalliques, torsadé(s) ou non, notamment en cuivre ou en aluminium, ou un de leurs alliages.

Dans la présente invention, l'accessoire pour câble est plus particulièrement destiné à être associé à au moins un câble.

Ledit accessoire entoure plus particulièrement au moins une extrémité d'un câble électrique, ladite extrémité étant celle qui est destinée à être associée audit accessoire.

L'accessoire peut être typiquement un corps longitudinal creux, tel que par exemple une jonction ou une terminaison pour câble, dans lequel au moins une partie d'un câble est destinée à être positionnée.

Lorsque l'accessoire est une jonction, cette dernière permet de connecter ensemble deux câbles, la jonction entourant alors en partie ces deux câbles. Plus particulièrement, l'extrémité de chaque câble destiné à être connecté est positionnée à l'intérieur de ladite jonction.

Lorsque l'accessoire est une terminaison, cette dernière entoure en partie un câble. Plus particulièrement, l'extrémité du câble destinée à être connecté est positionnée à l'intérieur de ladite terminaison.

L'enveloppe de protection thermique de l'invention peut entourer avantageusement le câble et l'accessoire pour câble, et plus particulièrement les câbles et leur jonction, ou bien le câble et sa terminaison.

Dans un mode de réalisation particulièrement préféré, l'enveloppe de protection de l'invention est la couche la plus à l'extérieur du dispositif.

Un autre objet de l'invention est l'utilisation d'une enveloppe de protection thermique telle que définie dans la présente invention, autour d'un câble et/ou d'un accessoire pour câble.

D'autres caractéristiques et avantages de la présente invention apparaîtront à la lumière de la description d'un exemple non limitatif d'un câble électrique selon l'invention fait en référence aux figures.

La figure 1 représente une vue schématique d'un dispositif selon l'invention, comprenant deux câbles électriques associés à une jonction, l'ensemble étant entouré par une enveloppe de protection thermique conforme à l'invention.

La figure 2 représente une vue schématique d'un dispositif selon l'invention, comprenant un câble électrique associé à une terminaison, l'ensemble étant entouré par une enveloppe de protection thermique conforme à l'invention.

La figure 3 représente une vue de dessus d'une partie d'une enveloppe de protection thermique conforme à l'invention.

Pour des raisons de clarté, seuls les éléments essentiels pour la compréhension de l'invention ont été représentés de manière schématique, et ceci sans respect de l'échelle.

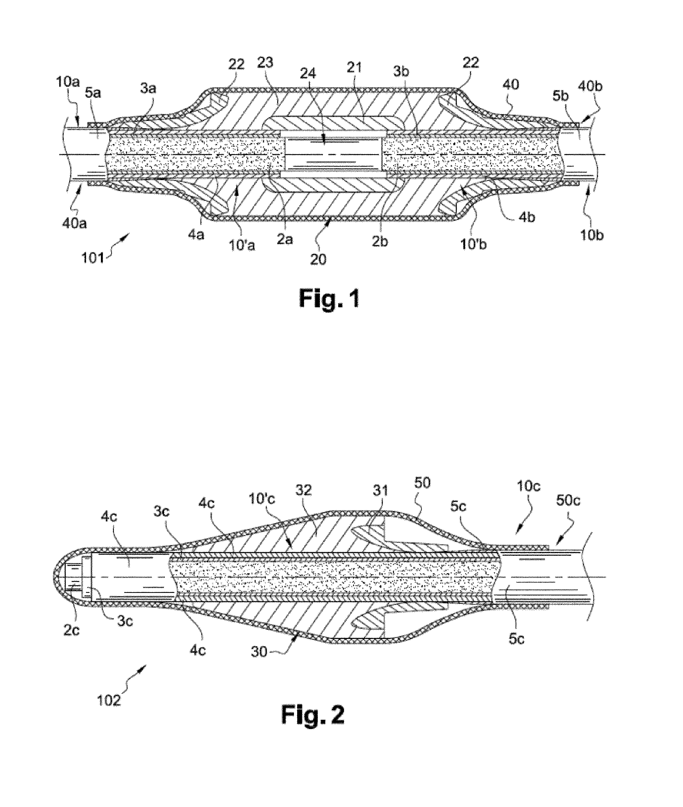

La figure 1 représente un dispositif 101 comprenant une jonction 20 entourant en partie deux câbles électriques 10a et 10b, ainsi qu'une enveloppe de protection thermique 40 conforme à l'invention entourant la jonction 20 et les deux câbles électriques 10a et 10b.

Cette enveloppe de protection thermique 40 est de forme sensiblement cylindrique et comprend deux extrémités ouvertes 40a et 40b pour le passage des câbles électriques 10a 10b et de la jonction 20.

L'enveloppe de protection thermique 40 s'étend le long du dispositif 101 autour d'une partie du câble électrique 10a, d'une partie du câble électrique 10b, et de l'ensemble de la jonction 20.

A titre d'exemple de câbles électriques et de jonction, on peut décrire plus particulièrement les câbles électriques 10a et 10b ainsi que la jonction 20 de la figure 1.

Les câbles électriques 10a et 10b comprennent respectivement une extrémité 10'a et 10'b, destinées à être entourées par la jonction 20.

Le corps de la jonction 20 comporte un premier élément semi-conducteur 21 et un second élément semi-conducteur 22, séparés par un élément électriquement isolant 23, lesdits éléments semi-conducteur 21, 22 et ledit élément électriquement isolant 23 entourent les extrémités 10'a et 10'b respectivement des câbles électriques 10a et 10b.

Cette jonction 20 permet de connecter électriquement le premier câble 10a au second câble 10b, notamment grâce à un connecteur électrique 24 disposé au centre de la jonction 20.

Le premier câble électrique 10a comprend un conducteur électrique 2a entouré par une première couche semi-conductrice 3a, une couche électriquement isolante 4a entourant la première couche semi-conductrice 3a, et une seconde couche semi-conductrice 5a entourant la couche électriquement isolante 4a.

Le second câble électrique 10b comprend un conducteur électrique 2b entouré par au moins une première couche semi-conductrice 3b, une couche électriquement isolante 4b entourant la première couche semi-conductrice 3b, et une seconde couche semi-conductrice 5b entourant la couche électriquement isolante 4b.

A ladite extrémité 10'a, 10'b de chaque câble électrique 10a, 10b, la seconde couche semi-conductrice 5a, 5b est au moins partiellement dénudée afin que la couche électriquement isolante 4a, 4b soit au moins partiellement positionnée à l'intérieur de la jonction 20, sans être recouverte de la seconde couche semi-conductrice 5a, 5b du câble.

A l'intérieur de la jonction 20, les couches électriquement isolantes 4a, 4b sont directement en contact physique avec l'élément électriquement isolant 23 et le premier élément semi-conducteur 21 de la jonction 20. Les deuxièmes couches semi-conductrices 5a, 5b sont directement en contact physique avec le second élément semi-conducteur 22 de la jonction 20.

La figure 2 représente un dispositif 102 comprenant une terminaison 30 entourant en partie un unique câble électrique 10c, ainsi qu'une enveloppe de protection thermique 50 conforme à l'invention entourant la terminaison 30 et le câble électrique 10c.

Cette enveloppe de protection thermique 50 est de forme sensiblement cylindrique et comprend une unique extrémité ouverte 50c pour le passage du câble électrique 10c et de la terminaison 30. L'autre extrémité de l'enveloppe de protection thermique 50 est fermée. L'enveloppe de protection thermique 50 de la figure 2 peut être apparentée à une enveloppe de type « chaussette ».

L'enveloppe de protection thermique 50 s'étend le long du dispositif 102 autour d'une partie du câble électrique 10c et de l'ensemble de la terminaison 30.

A titre d'exemple de câble électrique et de terminaison, on peut décrire plus particulièrement le câble électrique 10c ainsi que la terminaison 30 de la figure 2.

Le câble électrique 10c comprend une extrémité 10'c, destinée à être entourée par la terminaison 30.

Le corps de la terminaison 30 comporte un élément semi-conducteur 31 et un élément électriquement isolant 32, ledit élément semi-conducteur 31 et ledit élément électriquement isolant 32 entourent l'extrémité 10'c du câble électrique 10c.

Le câble électrique 10c comprend un conducteur électrique 2c entouré par une première couche semi-conductrice 3c, une couche électriquement isolante 4c entourant la première couche semi-conductrice 3c, et une seconde couche semi-conductrice 5c entourant la couche électriquement isolante 4c.

A ladite extrémité 10'c du câble électrique 10c, la seconde couche semi-conductrice 5c est au moins partiellement dénudée afin que la couche électriquement isolante 4c soit au moins partiellement positionnée à l'intérieur de la terminaison 30, sans être recouverte de la seconde couche semi-conductrice 5c du câble.

A l'intérieur de la terminaison 30, la couche électriquement isolante 4c, est directement en contact physique avec l'élément électriquement isolant 32 de la terminaison 30. La deuxième couche semi-conductrice 5c est directement en contact physique avec l'élément semi-conducteur 31 de la jonction 30.

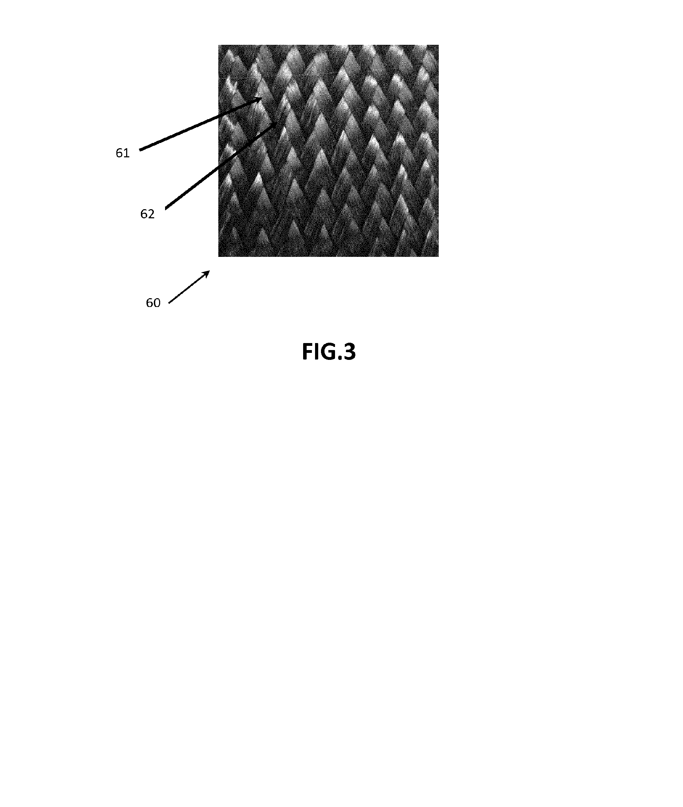

La figure 3 représente une vue de dessus d'une partie d'une enveloppe de protection thermique 60 conforme à l'invention.

Cette enveloppe de protection thermique 60 comprend un ensemble de mèches 61, 62 de matériau inorganique. Cette ensemble de mèches comprend une première série de mèches 61 s'étendant dans une première direction, et une seconde série de mèches 62 s'étendant dans une deuxième direction.

La première série et la deuxième série sont entrecroisées ou tressées ensemble, la première série passant au-dessus et en-dessous de la deuxième série.

Chaque mèche 61, 62 comprend une pluralité de filaments dudit matériau inorganique.

Un dispositif selon la figure 1 a été testé selon la norme IEC 600331. Ce dispositif comprend :
- une jonction pour câble électrique,
- deux câbles électriques identiques reliés par ladite jonction, et
- deux enveloppes de protection selon l'invention, les câbles électriques et la jonction étant entourés par la superposition desdites deux enveloppes de protection thermique.

Ces deux enveloppes de protection thermique sont identiques et commercialisées par la société Technifilm sous la référence

### « Thermix Socket^{®} E ».

L'enveloppe « Thermix Socket^{®} E » en tant que telle est constituée de deux couches tissées de fils (ou filaments) de basalte, et est ouvertes à ses deux extrémités, lesdites ouvertures étant de forme circulaire. Chaque extrémité a un diamètre minimal d'ouverture de 51 mm, et un diamètre maximal d'ouverture de 75 mm.

Chaque couche tissée de fils de basalte est un matériau tissé comprenant deux séries de mèches de basalte entrecroisées respectivement dans une première direction et dans une deuxième direction. Chaque mèche comprend environ 106 filaments de basalte.

Chaque filament (ou monofilament) de basalte a un diamètre d'environ 13 microns.

Enfin, la masse linéique de chaque couche est d'environ 200 g/km (i.e. « 200 tex »).

Les câbles électriques utilisés ont un diamètre extérieur de 47mm.

Le diamètre extérieur de la section transversale la plus grande de la jonction est de 64mm.

Plus particulièrement, une première enveloppe « Thermix Socket^{®} E » s'étend en continu le long de la jonction et autour d'une partie de chacun des câbles électriques connectés à ladite jonction. Une deuxième enveloppe « Thermix Socket^{®} E » entoure la première enveloppe « Thermix Socket^{®} E », pour former une double enveloppe composées au final de quatre couches tissées de fils de basalte.

Ainsi, l'ensemble de la jonction et une partie des câbles électriques sont bien protégées par la double enveloppe selon l'invention.

Le test selon la norme IEC 600331 est appliqué à ce dispositif selon l'invention, en appliquant une tension de 6 kV aux câbles électriques, tout en soumettant ce dispositif à une flamme de 750°C.

L'intégrité du dispositif ainsi testé selon la norme IEC 600331 est de plus de 2 heures. La double enveloppe selon l'invention permet avantageusement de protéger thermiquement de façon homogène les câbles et leur accessoire, quelques soient la structure et les reliefs propres au dispositif.

## Revendications

1. Dispositif comprenant un câble (10a, 10b, 10c) et/ou un accessoire (20, 30) pour câble, ledit câble et/ou ledit accessoire pour câble étant entouré par au moins une enveloppe de protection thermique (40, 50) comprenant un matériau inorganique ayant un point de fusion supérieur à 800°C, **caractérisé en ce que** le matériau inorganique est un matériau tissé comprenant des mèches (61, 62), chaque mèche comprenant au moins deux filaments du matériau inorganique.

2. Dispositif selon la revendication 1, **caractérisé en ce que** l'enveloppe de protection thermique ne comprend pas d'élément métallique.

3. Dispositif selon la revendication 1 ou 2, **caractérisée en ce que** l'enveloppe de protection thermique est une enveloppe non rubanée.

4. Dispositif selon l'une quelconque des revendications précédentes, **caractérisée en ce que** l'enveloppe de protection thermique est indépendante du câble et/ou de l'accessoire pour câble.

5. Dispositif selon l'une quelconque des revendications précédentes, **caractérisée en ce que** l'enveloppe de protection thermique comprend au moins une extrémité ouverte pour le passage du câble et/ou de l'accessoire pour câble, et de préférence deux extrémités ouvertes pour le passage du câble et/ou de l'accessoire pour câble.

6. Dispositif selon l'une quelconque des revendications précédentes, **caractérisée en ce que** l'enveloppe de protection thermique a une épaisseur constante le long de la partie du câble et/ou de l'accessoire pour câble à protéger.

7. Dispositif selon l'une quelconque des revendications précédentes, **caractérisée en ce que** l'enveloppe de protection thermique est de forme cylindrique.

8. Dispositif selon l'une quelconque des revendications précédentes, **caractérisé en ce que** le matériau inorganique comprend de la silice (SiO₂).

9. Dispositif selon l'une quelconque des revendications précédentes, **caractérisé en ce que** chaque mèche comprend au moins 20 filaments du matériau inorganique.

10. Dispositif selon l'une quelconque des revendications précédentes, **caractérisé en ce que** chaque filament a un diamètre inférieur à 100 microns, et de préférence inférieur à 50 microns.

11. Dispositif selon l'une quelconque des revendications précédentes, **caractérisé en ce que** l'enveloppe de protection thermique comprend des filaments de basalte.

12. Dispositif selon l'une quelconque des revendications précédentes, **caractérisé en ce que** l'enveloppe de protection est la couche la plus à l'extérieur du dispositif.

13. Dispositif selon l'une quelconque des revendications précédentes, **caractérisé en ce que** le câble est un câble électrique comprenant :
- un élément électriquement conducteur (2a, 2b, 2c) allongé,
- une première couche semi-conductrice (3a, 3b, 3c) entourant l'élément électriquement conducteur allongé,
- une couche électriquement isolante (4a, 4b, 4c) entourant la première couche semi-conductrice, et
- une deuxième couche semi-conductrice (5a, 5b, 5c) entourant la couche électriquement isolante.

14. Dispositif selon l'une quelconque des revendications 1 à 13, **caractérisé en ce que** l'accessoire pour câble est une jonction (20) ou une terminaison (30).

15. Utilisation d'une enveloppe de protection thermique telle que définie selon l'une quelconque des revendications précédentes, autour d'un câble et/ou d'un accessoire pour câble.
